(19) Europäisches Patentamt
European Patent Office
Office européen des brevets

(11) **EP 2 835 654 A1**

(12) **EUROPEAN PATENT APPLICATION**

(43) Date of publication:
**11.02.2015 Bulletin 2015/07**

(51) Int Cl.:
*G01Q 70/14* (2010.01)     *G01Q 70/16* (2010.01)
*G01Q 70/12* (2010.01)     *B82Y 35/00* (2011.01)
*B82Y 15/00* (2011.01)

(21) Application number: **13179874.6**

(22) Date of filing: **09.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Université de Genève
1211 Genève 4 (CH)**

(72) Inventor: **Lisunova, Yuliya
1205 Genève (CH)**

(74) Representative: **Sammer, Thomas
per Mens Intellectual
Property Consulting Sàrl
Rue Agasse 54
1208 Genève (CH)**

(54) **Insulator coated conductive probe and method of production thereof**

(57)    The present invention concerns an insulator coated conductive scanning probe comprising a holding part (1), an elastic part (2) arranged substantially parallel to a surface to be scanned, and a tip part (3) arranged on the free end of the elastic part (2) and being substantially perpendicular to the surface to be scanned, both the elastic part (2) and the tip part (3) having a conductive layer (4) with an end section (4.1) of the conductive layer on the tip part (3) of the probe being formed such as to have a substantially uniform cross-sectional configuration along the direction perpendicular to the surface to be scanned, the conductive layer (4) being covered by an insulating layer (5) except in the region of the apex (4.2) of the end section (4.1) of the conductive layer (4) on the tip part (3) of the probe. The insulating layer (5) on the scanning probe consists of an insulator coating formed by electron beam physical vapor deposition (EB-PVD). The invention also concerns a corresponding method of production as well as an adequate production device.

Fig.4b

## Description

The present invention pertains to an insulator coated conductive scanning probe comprising a holding part, an elastic part arranged substantially parallel to a surface to be scanned, and a tip part arranged on the free end of the elastic part and being substantially perpendicular to the surface to be scanned, both the elastic part and the tip part having a conductive layer with an end section of the conductive layer on the tip part of the probe being formed such as to have a substantially uniform cross-sectional configuration along the direction perpendicular to the surface to be scanned, the conductive layer being covered by an insulating layer except in the region of the apex of the end section of the conductive layer on the tip part of the probe, as well as to a method of production of said insulator coated conductive probe and to a corresponding production device.

In general, the present invention is situated in the context of the so-called scanning probe microscopy (SPM) which is a key technique of microstructure fabrication for providing for example ultrahigh density storage systems and devices for material characterization at the nanoscale, where the recording density, respectively the scanning resolution rely on the interaction of a sharp tip of the scanning probe with a scanned medium. The ability of providing probes of improved performance and life time characteristics is of great importance.

In the past, significant improvements in SPM have been achieved by introducing conductive scanning probes having an insulator coating, where a dielectric provides a chemically inert and electrically insulating outer layer around the conductive tip of the scanning probe, resulting in a probe robust enough for extended use in SPM imaging. First prototypes of such scanning probes were proposed in the document US 7,115,863. The fabrication process of these probes consists of two main manufacturing steps, namely, first, to encapsulate the conductive part of a conventional probe into a dielectric and, secondly, to remove the dielectric from the tip apex, for example by etching or by mechanical removal via scanning the probe under load against a thin film. This technique results in the formation of scanning probes having a tip part the conductor of which is laterally covered with an insulator for increasing mechanical strength of the conductor whereas the tip apex is exposed, i.e. exempt of insulating material. The part of the conductor at the end of the tip part of the probe is formed such as to have a fine and substantially uniform cross-sectional configuration perpendicular to the surface to be scanned, and is preferable realized by a carbon nanotube. The useful life time of the probes produced according to the fabrication process proposed in the document US 7,115,863 is far longer than that of probes without an insulator coating such as known before, i.e. these probes allow to draw a large number of microstructure patterns with a single probe.

However, the production process of the probes proposed in the document US 7,115,863 has several drawbacks. First, the yields of production are limited by the sophisticated facility required for this fabrication process. In fact, removal of the dielectric from the tip via etching or mechanical techniques requires very complex fabrication facilities and, in the case of etching, optimization of the etching process in respect of the conductive probe used. Also, exposure of the tip apex of the insulator coated conductive probes by removal of the dielectric material is a one-by-one process. This fabrication process therefore is quite expensive and bears the risk that the corresponding product becomes unprofitable. Secondly, another drawback consists in that removal of the dielectric from the tip apex may introduce physical and chemical changes to the apex, which is neither acceptable in terms of performance of the resulting probes nor suitable for large-scale fabrication of such insulator coated probes. Thirdly, another drawback arises from the fact that the microstructure fabrication technique of an insulator coated conductive probe such as proposed in the document US 7,115,863 results in the formation of a probe tip of a quadrangular pyramid shape having a flat apex. In fact, the physical radius of such a nanoelectrode is defined by the thickness of the deposited insulator layer, which contributes to the resolution of the image formation in SPM and therefore risks to decrease said resolution.

In view of the above mentioned disadvantages of the existing insulator coated conductive scanning probes, respectively the corresponding fabrication processes, it is the object of the present invention to overcome the above mentioned difficulties and to realize an insulator coated conductive scanning probe without any physical and chemical changes at the tip apex, thus allowing improved resolution of the scanning probe whilst maintaining the advantages with respect to mechanical robustness and improved life time of the probe, as well as to provide a corresponding large-scale and low-cost manufacturing process and a corresponding production device.

To this effect, the present invention proposes an insulator coated conductive scanning probe which is characterized by the features enumerated in claim 1 and which allows to achieve the objectives identified above, as well as a method of production of such scanning probes which is characterized by the features enumerated in claim 6 and a corresponding production device which is characterized by the features enumerated in claim 13.

In particular, an insulator coated conductive scanning probe according to the present invention is characterized by the fact that the insulating layer on the scanning probe consists of an insulator coating formed by electron beam physical vapor deposition (EB-PVD).

This allows that the physical radius at the apex of the tip part of the nanoelectrode formed by the scanning probe is defined only by the thickness, respectively the radius of the conductive layer at the tip apex. The thickness of the insulator layer surrounding the conductive layer of the tip part is uniform along the axial direction of the tip part, whilst the tip apex is not covered with the insulating layer, and the cross section of the tip part gradually increases in the direction extending from the tip apex towards the elastic part of the scanning probe. The insulating layer thus holds the tip part in a sort of insulating pyramidal shell whilst not covering the tip apex which guarantees high mechanical robustness. Also, such probe geometry significantly improves the resolution of SPM.

The method of production of an insulator coated conductive scanning probe according to the present invention is characterized by the fact that the insulating layer on the scanning probe is applied by electron beam physical vapor deposition (EB-PVD) of insulating material.

This provides for an optimized manufacturing process of insulator coated conductive scanning probes with an exposed tip apex due to the fact that the proposed manufacturing process is exempt of any removal step after the insulator deposition on the tip part. In particular, this avoids any exposure of the resolution ciritical tip apex to a post-insulator-desposition manufacturing step like etching or mechanical removal, such that no risk of introducing physical or chemical changes to the tip apex occurs during the manufacturing of the insulator coated scanning probe in accordance with the present invention. At the same time, by simpifying the step of applying the insulating coating and reducing the number of process steps required, this provides for a large-scale and low-cost manufacturing technique.

The corresponding production device comprises an EB-PVD chamber as well as a stage and a holder allowing to vary the angle of incidence of the electron beam onto the scanning probe to be coated with insulating material.

Other features and advantages of the present invention are mentioned in the dependent claims as well as in the description disclosing in the following, with reference to the figures, the invention in more detail.

The attached figures exemplarily and schematically illustrate the principles as well as, by way of example, one embodiment of the present invention.

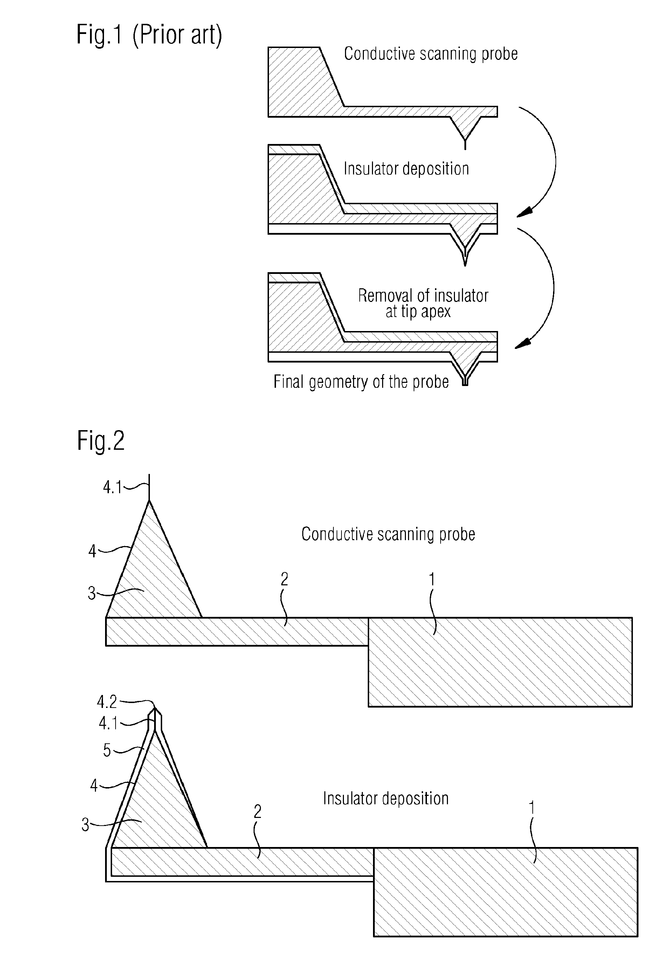

Figure 1 is a schematic diagram of a microstructure fabrication process of insulator coated conductive scanning probes according to prior art, illustrating the final geometry of the probe as well as of its tip apex.

Figure 2 shows in schematic manner the cross sectional structure of an insulator coated conductive scanning probe according to the present invention as well as the conceptual scheme of the method of production of such probes.

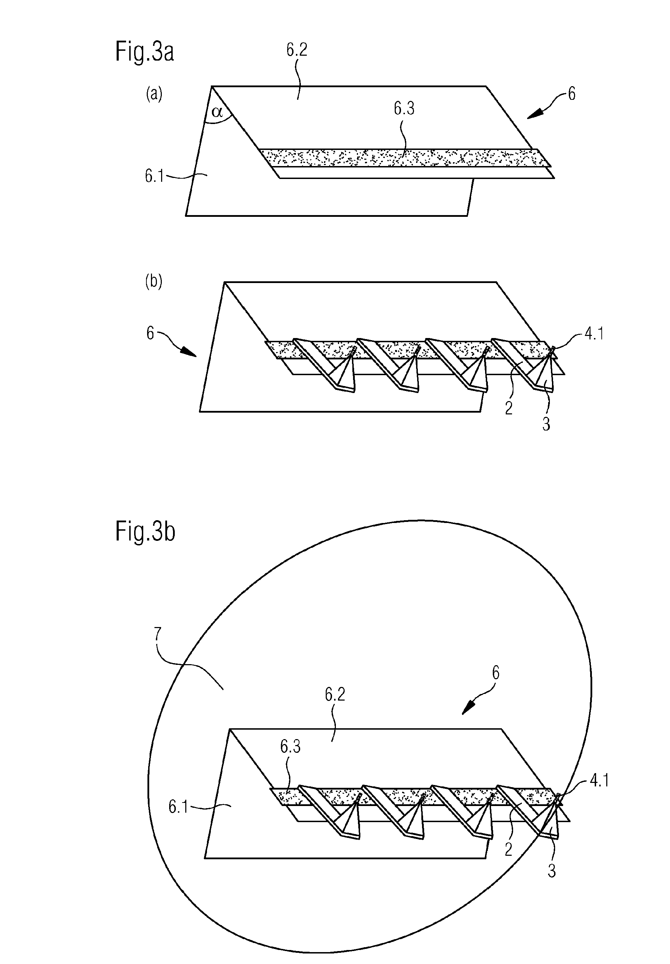

Figure 3a illustrates fabrication of a stage used for the method of production according to the present invention by presenting (a) the stage of variable angle $\alpha$ and (b) scanning probes attached to the stage; figure 3b shows the stage with scanning probes attached thereto fixed to a holder in an EB-PVD chamber.

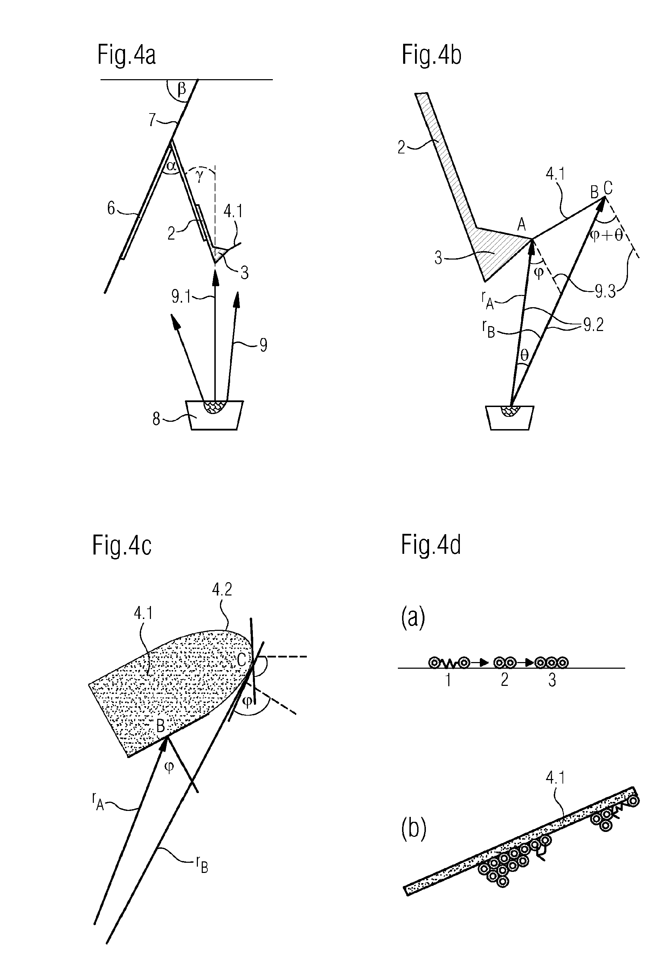

Figures 4a to 4d illustrate the method of production of insulator coated conductive scanning probes according to the present invention, where figure 4a is a cross sectional view of the stage with attached scanning probes positioned in an EB-PVD chamber; figure 4b illustrates the beam orientation of the EB-PVD and figure 4c is an enlarged view of the beam flux distribution at the region of the tip apex of the scanning probe during EB-PVD, the arrows symbolizing the particle flux direction; figure 4d schematically illustrates the process of nucleation and growth of the beam material on (a) a substrate by surface diffusion, metastable cluster formation, and critical cluster size formation and on (b) a scanning probe manufactured according to the present invention.

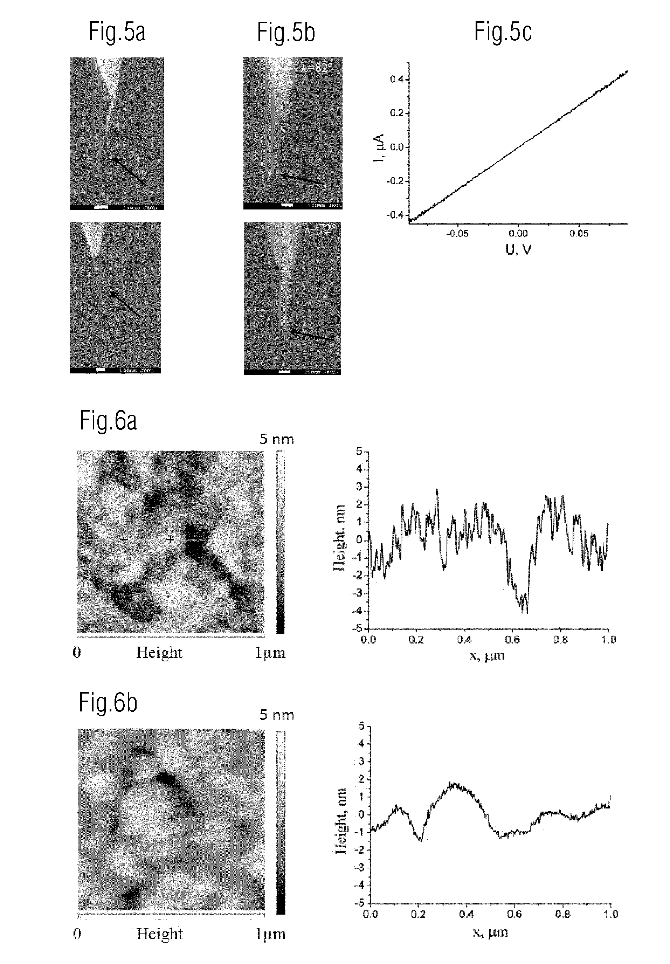

Figures 5a and 5b show SEM images of corresponding scanning probes, where figure 5a presents the scanning probe prior to insulator deposition and figure 5b presents the final geometry of the insulator coated conductive scanning probe after the insulator deposition step according to the present invention, figure 5c shows the current-voltage characteristic of an insulator coated conductive scanning probe produced according to the present invention, confirming that the probe apex is not covered with an insulator.

Figure 6a shows advanced contact imaging of rough surfaces by use of an insulator coated conductive scanning probe produced according to the present invention, whereas figure 6b shows for comparison advanced contact imaging of rough surfaces by use of a scanning probe produced according to a prior art manufacturing technique.

In the following, the invention shall be described in detail with reference to the above mentioned figures.
Figure 1 is a schematic representation of scanning probe manufacturing according to prior art, in particular according to the document US 7,115,863. The fabrication process of corresponding probes consists, in short, of providing a conventional conductive scanning probe without insulating layer, then encapsulating the conductive part of that probe into a dielectric, and finally removing the dielectric from the tip apex via etching or mechanical removal, these steps being indicated in general manner in figure 1. The resulting probes comprise a conductor covered with an insulator for increasing mechanical strength of the conductor. At the tip part of the probe, the conductor itself is formed such as to have a fine and substantially uniform cross-sectional configuration perpendicular to the surface to be scanned, such as visible in the lower part of figure 1. The useful life time of the probes produced according to the fabrication process proposed in the document US 7,115,863 is far longer than that of probes without an insulator coating such as known before, i.e. these probes allow to draw a large number of microstructure patterns with a single probe. However, like explained above, the requirement of removing some insulating material previously deposited at the apex of the tip part of the probe bears the risk to alter the tip apex and therefore to negatively impact the performance of the scanning probe, in particular the corresponding resolution, and complicates the manufacturing process.

The present invention therefore proposes, in general, an approach which allows to realize insulator coated conductive scanning probes having at least the quality, performance, and life time of the prior art probes, but which eliminates the necessity of removing insulator material previously applied on the probe, in particular by avoiding any additional step of removing material by etching or by mechanical techniques, such as to simplify the manufacturing of such probes which thus may be produced more cost effectively.

An insulator coated conductive scanning probe according to the present invention comprises, like indicated schematically in figure 2 showing a cross section of such a scanning probe, a holding part 1, an elastic part 2 arranged substantially parallel to a surface to be scanned, not indicated in figure 2 for reasons of simplification, and a tip part 3 arranged on the free end of the elastic part 2 and being substantially perpendicular to the surface to be scanned. The apex of the tip part 3 is supposed to serve as scanning tip when being moved relatively to the surface to be patterned. For that purpose, both the elastic part 2 and the tip part 3 have a conductive layer 4, where an end section 4.1 of the conductive layer 4 on the tip part 3 of the probe is formed such as to have a substantially uniform cross-sectional configuration along the direction perpendicular to the surface to be scanned. Also, the conductive layer 4 of a scanning probe according to the present invention is covered by an insulating layer 5, except in the region of the apex 4.2 of the end section 4.1 of the conductive layer 4 on the tip part 3 of the probe. This generally corresponds to the structure of a known conductive scanning probe such as described in the above mentioned document US 7,115,863. Therefore, the structure of such conductive scanning probes as well as its production will not be discussed in more detail, except the formation of the insulating layer 5 which forms the central part of the present invention. Also, it is to be noted that it is possible according to the method of production of conductive scanning probes according to the present invention that the conductive layer 4 and its end section 4.1 are uniformly coated with the insulating layer 5, except at the tip apex 4.2 as well as at the front side of the elastic part 2 and of the holder part 1 which may both remain uncoated with insulating layer 5.

Preferably, the end section 4.1 of the conductive layer 4 on the tip part 3 of the probe is realized by a carbon nanotube. Due to the fact that such carbon nanotubes are conductive and can be produced with uniform diameters of about some tens of nanometers or less, preferably of about 5 nm to 20 nm, and lengths of up to few micrometers, preferably of about 100 nm to 1 $\mu$m, they are ideally adapted for forming said end section 4.1 by being joined to the end of the tip part 3 oriented towards the surface to be scanned. Such carbon nanotubes are commercially available and well known, such that further discussion of its properties is not necessary. Since the preferred embodiment of the scanning probe includes use of such a carbon nanotube, the terms "end section 4.1" of the conductive layer 4 on the tip part 3 of the probe and "carbon nanotube" will be largely employed synonymously in the following.

Insulator coated conductive scanning probes according to the present invention distinguish from prior art by the fact that the insulating layer 5 on the scanning probe, i.e. on the conductive layer 4 and, especially, on the end section 4.1, thus in particular on the lateral sidewalls of the carbon nanotube forming preferably that end section 4.1, consists of an insulator coating formed by electron beam physical vapor deposition (EB-PVD). As will become clear in the following, this allows to form the insulating layer 5 in a single process step without covering the apex of the end section 4.1 with insulating material, thus avoiding any additional process step for removal of such material previously deposited on the apex by production methods according to prior art. Preferably, the thickness of the insulating layer 5 surrounding the conductive layer 4 and its end section 4.1 on the tip part 3 is uniform along the axial direction of the tip part 3. Furthermore, the cross section of the tip part 3 is preferably chosen such that if gradually increases in the direction extending from the tip apex 4.2 towards the elastic part 2 of the scanning probe.

Having described here above the structure of an insulator coated conductive scanning probe according to the present invention, the manufacturing process of such insulator coated probes shall now be described in detail.

The method of production according to the present invention allows to produce insulator coated conductive scanning probes having the above described structure by selective deposition of the insulating material such that, during the deposition of insulating material, the conductive layer 4 and especially the carbon nanotube 4.1 of the probe is uniformly coated by forming an insulating layer 5 while the apex 4.2 of the end section 4.1, respectively of the carbon nanotube 4.1 on the tip part 3 remains uncovered, resulting in an exposed tip apex 4.2 ideally adapted to be used as conductive scanning probe, as will become clear in the following. This is achieved due to the fact that the insulating layer 5 on the scanning probe is applied by electron beam physical vapor deposition (EB-PVD) of insulating material.

The method of production according to the present invention makes use of a stage 6 comprising a mask and a holder which allow to control the positioning of the conductive scanning probes to be coated in an EB-PVD chamber. Adequate positioning of the conductive scanning probes in said chamber, according to the present invention, promotes selective coating of the conductive layer 4 and especially of the carbon nanotube 4.1 by insulating material. The stage 6 allows variation of the angle of the coating incidence and control over the final microstructure formed during the deposition process, such as decribed in detail here below. Like schematically shown in the upper part of figure 3a, the stage 6 preferably comprises a metallic sheet bent to form a "V" shape, the adjusting angle α between the two parts 6.1, 6.2 of the "V" shaped metallic sheet being able to be varied. The stage 6 can, of course, be made of different material, however, it should satisfy the criteria described here below. In addition, a carbon tape 6.3 is attached to one of the two parts 6.1, 6.2 of the "V" shaped sheet of the stage 6 and is used for attachment of the probes, as shown in schematic manner in the lower part of figure 3a. Instead of attachment of the probes by the carbon tape 6.3, there may also be used other joining materials, like glying using glues like epoxy or the like, or any attachment means such as screws that allow to secure the probes to a solid support throughout the deposition process.

For coating the probes, especially the carbon nanotube 4.1 mounted at its tip part 3, with insulating material whilst maintaining the apex 4.2 of the carbon nanotube 4.1 uncoated, uncoated conductive scanning probes manufactured by any known method of prior art and having the above described structure, i.e. in particular comprising a conductive layer 4 including an end section, respectively a carbon nanotube 4.1, are attached to the stage 6 and positioned in said EB-PVD chamber by fixing the stage 6 to a holder 7, as shown in schematic manner in figure 3b. The EB-PVD chamber then allows deposition of insulating material on the probes. The insulating material preferably consist in SiOx, but other materials like Ti, Cr, ceramic materials like zirconia oxid (ZnOx) or magnesia oxid (MgO) and other oxides are adapted as well. The processing parameters during the deposition of insulating material, in particular in the case of SiOx, include a distance between the stage 6, respectively the probes attached to said stage, and the source 8 of an electron beam 9 situated inside the EB-PVD chamber of about 25 cm - 65 cm, preferably 35 cm - 55 cm, and in the most preferred embodiment 35 cm - 45 cm, that configuration being schematically illustrated in figure 4a. Like also schematically shown in figure 4a, another processing parameter consists in the positioning angle β of the holder 7 inside the EB-PVD chamber which allows to incline the stage 6 in the same plane as is situated the above mentioned adjusting angle α between the two parts 6.1, 6.2 of the "V" shaped sheet of the stage 6. Preferably, the positioning angle β of the holder 7 is situated in the range of 60° - 80°, most preferably at 70°, if the above mentioned adjusting angle α meets the condition α ≥ 45°. The same conditions can be met with other combinations of these angles, for example with an adjusting angle α of 115° and a positioning angle β of EB-PVD holder of 0°, or by any other configuration which allows to form an incident beam angle γ between the central electron beam line 9.1 and the plane of the elastic part 2 of the scanning probes situated in the range of 5° - 45°, preferably at 25°, such as schematically indicated in figure 4a. Also, the holder 7 can be turned around such that the electron beam 9 may hit on the probe from the other side as compared to the configuration depicted in figures 4a and 4b, i.e. on the side of the probe being in the beam shadow in the configuration depicted in figures 4a and 4b, for the reasons which will become clear in the course of the further description. Another processing parameter consists in the deposition rate of the insulating material, which is in the case of SiOx preferably situated in the range of 0.05 nm/s to 0.2 nm/s, most preferably at 0.1 nm/s. At such deposition rates, the growth time applied, depending on the thickness of the insulating layer 5 to be formed on the scanning probes, lies typically in the range of 1000 s to 150000 s, preferably at about 8000 s to 14000 s, most preferably at about 12000 s. At given conditions, the insulating layer 5, consisting preferably of SiOx crystal, is uniformly grown on the conductive layer 4, in particular on the sidewalls of the carbon nanotube 4.1, whilst leaving its apex 4.2 uncoated, as shown symbolically in figures 4b and 4c, for the reasons indicated in the following.

In fact, with reference to figures 4b and 4c, it is to be noted that the density of the deposited insulating material, i.e. the density of the resulting insulating layer 5, is controlled by the deposition angle φ formed between the local beam line 9.2 of the incident insulating material of the electron beam 9 and a perpendicular 9.3 on the surface at the place onto which the incident insulating material beam hits, according to the equation

$$I_B = I_A \frac{r_A^2}{r_B^2} \cos\theta \cos(\theta+\varphi) \qquad (1),$$

where $I_A$ and $I_B$ are the beam flux of the deposited material, $r_A$ and $r_B$ are the distances of the electron beam source 8 to the scanning probe to be coated at the points A and B, respectively, φ is the angle of incidence of the insulating material used as coating as compared to the perpendicular to the surface to be coated, and θ is the effusion angle of the electron beam, this being illustrated in figure 4b. The effusion angle can be accounted as θ=0° at given experimental conditions, since the length l of the carbon nanotube 4.1 is much smaller than the distance of the electron source 8 to the probes to be coated, especially to the carbon nanotubes 4.1, given that usually

$I \le 1\ \mu m$. From equation (1), it thus follows that a surface situated at large deposition angles $\varphi$ with respect to the vapor cloud of the incident beam, i.e at deposition angles $\varphi$ approaching 90° such that the incident beam line 9.1 is approximately parallel to the surface to be coated, tends to be less dense coated than a surface situated at small deposition angles $\varphi$, i.e at deposition angles $\varphi$ approaching 0° such that the incident beam line 9.1 is approximately perpendicular to the surface to be coated. Therefore, to allow coating of the conductive scanning probe and, in particular, its carbon nanotube 4.1, with insulating material, preferably with SiOx, whilst maintaining the apex 4.2 of the carbon nanotube 4.1 uncoated during the deposition, the following condition should be satisfied

$$\frac{I_C}{I_A} \to 0 \quad (2).$$

The condition of equation (2) can be met at $\varphi \to 90°$, this situation being illustrated schematically in the enlarged view of figure 4c, see in particular at a point C in the region of the apex 4.2 of the carbon nanotube 4.1. In that region, the binding energies of SiOx molecules, or in general of the molecules of the insulating material used as coating for the electron beam, and the carbon atoms of the carbon nanotube 4.1 are low, accompanied by low energy barriers for diffusion of SiOx atoms on the nanotube substrate, leading to rapid motion of SiOx atoms away from the apex 4.2 of the carbon nanotube 4.1 onto the sidewalls of the carbon nanotube 4.1 which forms a kind of nanowire. At given growth conditions, smaller nanoparticles will be formed at the tip apex 4.2, however, more rapid growth and bigger nanoparticles will be formed on the sidewalls of the carbon nanotube 4.1. Simultaneously, smaller nanoparticles on the surface of the carbon nanotube 4.1 are energetically less stable than larger ones due to their relatively larger surface to volume ratio. The transformation of the smaller particles into larger ones is energetically favorable on the surface of the carbon nanotube 4.1, as shown symbolically in figure 4d. Therefore, exposing the conductive scanning probes, respectively its carbon nanotube 4.1, to be coated to the electron beam of the EB-PVD chamber at the above mentioned angles, i.e. in particular at small incident beam angles $\gamma$ between the central electron beam line 9.1 and the plane of the elastic part 2 of the scanning probes, preferably situated in the range of 5° - 45°, which corresponds to large deposition angles $\varphi$ situated in the range of 45° to 90°, preferably in the range of 65° to 85°, and approaching locally 90° on the surface of the carbon nanotube 4.1, results in gradual increases of the thin film of insulating material grown by EB-PVD in the direction extending away from the apex 4.2, whilst the region of the apex 4.2 may be regarded as approximately being uncovered by insulating material. Therefore, the final structure of the insulating layer 5 deposited in such manner by EB-PVD forms, in the region of the apex 4.2 of the carbon nanotube 4.1, a sort of pyramidal insulator shell with an exposed apex of the carbon nanotube 4.1 of the scanning probe, whereas the remaining surfaces of the probe, in particular the sidewalls of the carbon nanotube 4.1 and the conductive layer 4 on the tip part 3 and the elastic part 2 are covered with an insulating layer of approximately uniform thickness. If the holder 7 remains in the same position during the whole deposition process, also the front side of the elastic part 2 and of the holder part 1 is not covered with an insulating layer 5 as being in the beam shadow of the electron beam 9. This is advantageous for fabrication of coaxial probes because it eliminates both any exposure of coaxial electrodes to a focused ion beam etching and any need for a sophisticated technique of re-opening access to the electrical contacts on the probe. If for any reason the insulating layer 5 shall be formed also on the front side of the elastic part 2 and of the holder part 1, this is simply possible by turning the holder 7 such as mentioned here above, such that said front side will no longer be in the beam shadow of the electron beam 9, but will be covered with insulating material.

The physical radius of the apex of scanning probes produced according to the present invention is defined by the radius of its end section, respectively the carbon nanotubes 4.1, thus strongly enhancing the resolution of image formation in the SPM, as shown in figures 5a and 5b. These figures show SEM images of corresponding scanning probes, where figure 5a presents the scanning probe prior to insulator deposition and figure 5b presents the final geometry of the insulator coated conductive scanning probe after the insulator deposition step according to the present invention. Figure 5c shows the current-voltage characteristic of an insulator coated conductive scanning probe produced with the method according to the present invention, which confirms that the probe apex is not covered with an insulator. To demonstrate the results obtained with scanning probes produced according to the present invention, figure 6a shows advanced contact imaging of rough surfaces by use of such an insulator coated conductive scanning probe, whereas figure 6b shows, for comparison, advanced contact imaging of rough surfaces by use of a scanning probe produced according to a prior art manufacturing technique.

In light of the above description, the advantages of a scanning probe produced according to the present invention, respectively of the corresponding method of production are clear. The method of production according to the present invention allows to provide an insulator coated conductive scanning probe having an exposed pyramid shape tip apex with a characteristic vertex angle $\lambda \le 90°$ such as illustrated in the SEM images of figure 5b. The thickness of the insulating layer surrounding the sidewalls of the carbon nanotube 4.1 along its axial direction is uniform, whereas it gradually decreases in the apex region in the direction extending towards the apex. In particular, the tip apex as well as, depending on the orientation of the holder 7 during the deposition process, the front side of the elastic part 2 and of the holder part 1 is not covered with an insulating layer , the latter being in the beam shadow of the electron beam 9 if the position of the holder 7 remains unchanged. The insulator coated conductive scanning probe produced in such a manner therefore has an optimal structure, in particular an increased mechanical strength due to the presence of the insulating layer reinforcing the robustness of the carbon nanotube and a minimal thickness at the apex of the carbon nanotube leading to a high scanning resolution. Also, there are no physical and chemical changes introduced at the tip apex during the deposition of the insulating material. The manufacturing process according to the proposed method of production is simplified due to the absence of any additional step of removal of insulating material which, in prior art techniques, would have been previously deposited at critical areas like the tip apex. This allows to streamline the production process, which enables large-scale and low-cost production of such scanning probes. Moreover, such probe fabrication and the resulting final probe geometry is especially useful for coaxial probe fabrication because it eliminates both any exposure of coaxial electrodes to a focused ion beam etching and any need for a sophisticated technique of re-opening access to the electrical contacts on the probe. Coaxial probes, apart from the conductive tip and the first insulating SiOx layer, include also a second coaxial metallic coating used as a shield. The separation of the tip and shield contacts can be easily achieved by using the deposition technique described herein due to the fact that the back side of the elastic part 2 and of the holder part 1 can be used as the shield contact and the uncoated front side of the elastic part 2 and of the holder part 1 can be used as the tip contact. By applying different potentials to the tip and the shield, an electrostatic lens is formed narrowing the probing diameter and thus potentially improving the spatial resolution. Also, if there is a need in uniform insulator coating of the probe part 3 as well as of the front side of the elastic part 2 and of the holder part 1, the probe can be reversed during the deposition process to achieve coating on both sides of all parts of the probe, including both sides of the elastic part 2 and of the holder part 1, and thus to allow to achieve any desired probe configuration.

**Claims**

1. Insulator coated conductive scanning probe comprising a holding part (1), an elastic part (2) arranged substantially parallel to a surface to be scanned, and a tip part (3) arranged on the free end of the elastic part (2) and being substantially perpendicular to the surface to be scanned, both the elastic part (2) and the tip part (3) having a conductive layer (4) with an end section (4.1) of the conductive layer on the tip part (3) of the probe being formed such as to have a substantially uniform cross-sectional configuration along the direction perpendicular to the surface to be scanned, the conductive layer (4) being covered by an insulating layer (5) except in the region of the apex (4.2) of the end section (4.1) of the conductive layer (4) on the tip part (3) of the probe, **characterised by the fact that** the insulating layer (5) on the scanning probe consists of an insulator coating formed by electron beam physical vapor deposition (EB-PVD).

2. Scanning probe according to the preceding claim, **characterised by the fact that** the thickness of the insulating layer (5) of said end section (4.1) decreases in the region of the apex (4.2) in the direction extending towards the apex (4.2) such as to form an apex region substantially uncovered by insulating material, the exposed pyramid shape tip apex (4.2) having a characteristic vertex angle $\lambda \leq 90°$.

3. Scanning probe according to one of the preceding claims, **characterised by the fact that** the thickness of the insulating layer (5) covering the conductive layer (4, 4.1) of the tip part (3) is uniform along the axial direction of the tip part (3), in the region extending away from the apex (4.2).

4. Scanning probe according to one of the preceding claims, **characterised by the fact that** the cross section of the tip part (3) gradually increases in the direction extending from the tip apex (4.2) towards the elastic part (2) of the scanning probe.

5. Scanning probe according to one of the preceding claims, **characterised by the fact that** the end section (4.1) of the conductive layer (4) on the tip part (3) of the probe is realized by a carbon nanotube.

6. Method of production of a scanning probe according to one of the preceding claims, comprising the steps of

   - providing a conductive scanning probe comprising a holding part (1), an elastic part (2) arranged substantially parallel to a surface to be scanned, and a tip part (3) arranged on the free end of the elastic part (2) and being substantially perpendicular to the surface to be scanned,
   - forming a conductive layer (4) on both the elastic part (2) and the tip part (3) with an end section (4.1) of the conductive layer on the tip part (3) of the probe being formed such as to have a substantially uniform cross-sectional configuration along the direction perpendicular to the surface to be scanned,

**characterised by the fact that** the method further comprises the step of

> - applying an insulating layer (5) on the scanning probe by electron beam physical vapor deposition (EB-PVD) of insulating material, such that said conductive layer (4) is covered by the insulating layer (5) except in the region of the apex (4.2) of the end section (4.1) of the conductive layer (4) on the tip part (3) of the probe.

7. Method according to the preceding claim, **characterised by the fact that** the electron beam physical vapor deposition (EB-PVD) of insulating material is performed at large deposition angles φ of the insulating material used as coating as compared to the perpendicular to the surface to be coated, the deposition angle φ approaching locally 90° on the surface of the end section (4.1), resulting in gradual increases of the thin film of insulating material grown by EB-PVD in the direction extending away from the apex (4.2) of said end section (4.1), whilst the region of the apex (4.2) remains substantially uncovered by insulating material.

8. Method according to the preceding claim, **characterised by the fact that** the deposition angles φ is situated in the range of 45° to 90°, preferably in the range of 65° to 85°

9. Method according to one of the preceding claims 7 to 8, **characterised by the fact that** the electron beam physical vapor deposition (EB-PVD) of insulating material is performed at a distance between the probe and the source (8) of an electron beam (9) situated inside the EB-PVD chamber of about 25 cm to 65 cm, preferably 35 cm to 55 cm, and most preferably 35 cm to 45 cm.

10. Method according to one of the preceding claims 6 to 9, **characterised by the fact that** the deposition rate of the insulating material is situated in the range of 0.05 nm/s to 0.2 nm/s, preferably at 0.1 nm/s.

11. Method according to one of the preceding claims 6 to 10, **characterised by the fact that** the growth time applied, depending on the thickness of the insulating layer (5) to be formed on the scanning probe, is situated in the range of 1000 s to 15000 s, preferably at about 8000 s to 14000 s, most preferably at about 12000 s.

12. Method according to one of the preceding claims 6 to 11, **characterised by the fact that** the insulating material is chosen from the group comprising SiOx, SiOx, Ti, Cr and other relative oxides.

13. Device for realizing the method of production of a scanning probe according to one of the preceding claims 6 to 12, **characterised by the fact that** it comprises an EB-PVD chamber as well as a stage (6) and a holder (7) adapted to be placed inside the EB-PVD chamber, said EB-PVD chamber comprising an electron beam source (8) being adapted to produce an electron beam (9) of insulating material for exposure of the conductive scanning probe to be coated to said electron beam (9), the stage (6) being adapted for attachment of at least a scanning probe, and the holder (7) being adapted for fixing the stage (6) inside the EB-PVD chamber.

14. Device according to the preceding claim, **characterised by the fact that** at least one of the stage (6) and the holder (7) is adapted to allow variation of the angle of incidence of the electron beam (9) on the scanning probe to be coated and/or is adapted to be placed in a reversed position inside the EB-PVD chamber to allow the electron beam (9) to hit on a side of the scanning probe previously situated in the beam shadow of the electron beam (9).

15. Device according to the preceding claim, **characterised by the fact that** the holder (7) inside the EB-PVD chamber allows to incline the stage (6) with at least a scanning probe attached thereto by variation of a positioning angle (β) and/or the stage (6) comprises two parts (6.1, 6.2) the relative position of which is adjustable by an adjusting angle (α) such as to allow variation of the angle of incidence of the electron beam (9) on the scanning probe to be coated.

## Fig.1 (Prior art)

Conductive scanning probe

Insulator deposition

Removal of insulator at tip apex

Final geometry of the probe

## Fig.2

Conductive scanning probe

Insulator deposition

Fig.3a

Fig.3b

Fig.4a

Fig.4b

Fig.4c

Fig.4d

(a)

1   2   3

(b)

4.1

Fig.5a

Fig.5b

Fig.5c

Fig.6a

Fig.6b

Europäisches
Patentamt

European
Patent Office

Office européen
des brevets

# EUROPEAN SEARCH REPORT

**Application Number**

EP 13 17 9874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/199945 A1 (AOKI YUKIHIRO [JP] ET AL) 21 August 2008 (2008-08-21) | 1-5 | INV.<br>G01Q70/14 |
| Y | * figures 1-7 * | 6-12 | G01Q70/16 |
| A | * paragraph [0044] - paragraph [0083] * | 13-15 | |
| | ----- | | ADD. |
| X | ROSE V ET AL: "X-ray nanotomography of SiO-coated PtIrtips with sub-micron conducting apex", APPLIED PHYSICS LETTERS, AIP, AMERICAN INSTITUTE OF PHYSICS, MELVILLE, NY, US, vol. 99, no. 17, 24 October 2011 (2011-10-24), pages 173102-173102, XP012153282, ISSN: 0003-6951, DOI: 10.1063/1.3655907 [retrieved on 2011-10-24] | 13-15 | G01Q70/12<br>B82Y35/00<br>B82Y15/00 |
| Y | * figure 1 * * page 1, column 2, paragraph 2 - page 2, column 1, paragraph 1 * | 6-12 | |
| | ----- | | |
| X,D | US 7 115 863 B1 (ISHIBASHI MASAYOSHI [JP] ET AL) 3 October 2006 (2006-10-03) | 1,3-5 | |
| A | * figures 11,12 * * column 9, line 66 - column 10, line 51 * | 2,6-15 | **TECHNICAL FIELDS SEARCHED (IPC)** |
| | ----- | | G01Q |
| A | DE 10 2007 019243 A1 (TEAM NANOTEC GMBH [DE]) 8 November 2007 (2007-11-08) * paragraph [0031] - paragraph [0033] * | 1-15 | |
| | ----- | | |
| A | US 2008/182089 A1 (STEVENS RAMSEY M [US]) 31 July 2008 (2008-07-31) * figures 1-4 * * paragraph [0021] - paragraph [0027] * | 6-15 | |
| | ----- | | |

The present search report has been drawn up for all claims

| Place of search | Date of completion of the search | Examiner |
|---|---|---|
| Berlin | 14 October 2013 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 17 9874

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2013

| Patent document cited in search report | | | Publication date | Patent family member(s) | | | Publication date |
|---|---|---|---|---|---|---|---|
| US | 2008199945 | A1 | 21-08-2008 | JP | 4798454 | B2 | 19-10-2011 |
| | | | | JP | 2008199936 | A | 04-09-2008 |
| | | | | US | 2008199945 | A1 | 21-08-2008 |
| | | | | US | 2011027872 | A1 | 03-02-2011 |
| US | 7115863 | B1 | 03-10-2006 | JP | 3884887 | B2 | 21-02-2007 |
| | | | | JP | 2001062791 | A | 13-03-2001 |
| | | | | US | 7115863 | B1 | 03-10-2006 |
| DE | 102007019243 | A1 | 08-11-2007 | NONE | | | |
| US | 2008182089 | A1 | 31-07-2008 | EP | 2118637 | A2 | 18-11-2009 |
| | | | | JP | 2010516620 | A | 20-05-2010 |
| | | | | US | 2008182089 | A1 | 31-07-2008 |
| | | | | US | 2010003500 | A1 | 07-01-2010 |
| | | | | WO | 2008094870 | A2 | 07-08-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7115863 B